(19) Europäisches Patentamt
European Patent Office
Office européen des brevets

(11) EP 0 700 822 B1

(12) **EUROPÄISCHE PATENTSCHRIFT**

(45) Veröffentlichungstag und Bekanntmachung des Hinweises auf die Patenterteilung:
**11.11.1998 Patentblatt 1998/46**

(51) Int. Cl.$^6$: **B62D 53/08**, B60T 8/00, B60K 28/14

(21) Anmeldenummer: **95112828.9**

(22) Anmeldetag: **16.08.1995**

(54) **Verfahren zur Begrenzung des Knickwinkels zwischen dem Vorderwagen und dem Nachläufer eines Gelenkomnibusses**

Method for limiting the jackknifing angle between the front and rear sections of an articulated bus

Procédé limitant l'angle de pliage entre les parties avant et arrière d'un autobus articulé

(84) Benannte Vertragsstaaten:
**BE FR IT SE**

(30) Priorität: **06.09.1994 DE 4431698**

(43) Veröffentlichungstag der Anmeldung:
**13.03.1996 Patentblatt 1996/11**

(73) Patentinhaber:
**DAIMLER-BENZ AKTIENGESELLSCHAFT**
**70567 Stuttgart (DE)**

(72) Erfinder:
**Niemann, Klaus, Dr.-Ing.**
**D-73642 Welzheim (DE)**

(56) Entgegenhaltungen:
**EP-A- 0 015 176**
**DE-A- 2 823 519**
**FR-A- 2 611 611**
**US-A- 4 231 442**
**EP-A- 0 603 493**
**FR-A- 2 450 171**
**US-A- 4 060 284**
**US-A- 4 853 553**

EP 0 700 822 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Begrenzung des Knickwinkels für einen Gelenkomnibus mit einem Nachläufer, der mit dem Vorderwagen über ein Gelenk verbunden ist und bei dem zumindest eine Achse des Nachläufers angetrieben ist.

Aus der EP 0 015 176 A1 die den nächstkommenden Stand der Technik offenbart, ist es bekannt, bei einem Gelenkbus nicht nur den Nachläufer anzutreiben, sondern auch am Vorderwagen eine angetriebene Achse vorzusehen. Überschreitet die Querkraft im Gelenk zwischen Vorderwagen und Nachläufer einen Schwellenwert, so setzt eine Regelung der Antriebskraft an Vorderwagen und Nachläufer ein, so daß die Gelenkkraft diesen Schwellenwert nicht überschreitet.

Aus der EP 0603 493 A2 ist ein Verfahren bekannt, wonach beim Bremsen die Gelenkkraft in Hochrichtung erfaßt wird und die Bremsleistung an Zugfahrzeug und Hänger so geregelt wird, daß das Verhältnis zwischen der horizontalen Ist-Gelenkkraft zu der vertikalen Ist-Gelenkkraft sich dem Verhältnis zwischen der Fahrzeugverzögerung zur Erdbeschleunigung annähert.

Ein Gelenkbus ist beispielsweise aus dem Artikel "Knickschutzregelung mit Mikrocomputer für Gelenkbus" erschienen im VDI-Bericht Nr. 348,1979 S. 51ff. bekannt. Um beim Bremsen und beim Treiben ein stabiles Fahrzeug mit für den Fahrer abschätzbarem Fahrverhalten zu erzielen ist eine Knickschutzvorrichtung erforderlich, die ein Einknicken des Fahrzeugs im Gelenk verhindert. Dazu wird die Knickbewegung über elektrisch ansteuerbare Stellzylinder oberhalb von bestimmten Knickwinkeln gesperrt und in einem darunterliegenden Knickwinkelbereich gedämpft. Die zulässigen Knickwinkelbereiche werden dabei im wesentlichen aus dem Lenkwinkel bestimmt. Unter Knickwinkel ist dabei der Winkel zwischen der Längsrichtung des Vorderwagens und der Längsrichtung des Nachläufers zu verstehen, der aus Rotationsbewegungen des Gelenks um die Hochachse entsteht.

Nachteilig ist es, daß ein derartiger Knickschutz eine große Bauhöhe beansprucht. Da der Knickschutz im Gelenk unterhalb des Fahrzeugbodens angeordnet ist, kann ein mit einem derartigen Knickschutz ausgerüsteter Gelenkbus im Bereich des Gelenks nicht in Niederflurbauweise ausgeführt werden.

Es ist ferner beispielsweise aus der DE 40 35 805 C1 bekannt, daß gezogene Hänger bei Bremsvorgehen nur dann ein stabiles Fahrverhalten aufweisen, wenn die am Hänger auftretende Bremskraft größer ist als die Bremskraft im Zugfahrzeug. Die Bremskraft am Hänger wird so bestimmt, daß sich zwischen Hänger und Zugfahrzeug ein vorgegebener Sollwert für die Koppelkraft einstellt.

Im übrigen ist es aus der US 4,150,841 bekannt, bei zu Versuchszwecken auf abgesperrten Strecken durchgeführten Fahrten zwei Fahrzeuge mit einem Träger zu Koppeln. Aufgrund der in den Träger gemessenen Kräfte wird die Lenkung und die Antriebsleistung eines Fahrzeugs sowie die Bremsbetätigung so geregelt, daß der Träger keine Koppelkräfte überträgt. Dann ist das zweite Fahrzeug so gesteuert, daß es selbstständig rückwirkungsfrei dem ersten Fahrzeug folgt.

Aufgabe der Erfindung ist es, für Gelenkbusse einen Knickschutz darzustellen, der es erlaubt, den Gelenkbus im Bereich des Gelenks in Niederflurbauweise auszuführen.

Diese Aufgabe wird erfindungsgemäß durch das Verfahren nach Anspruch 1 gelöst.

Zumindest eine Achse des Vorderwagens wird ebenfalls angetrieben. Die Differenz zwischen Antriebskraft bzw. Bremskraft am Vorderwagen und am Nachläufer wird laufend so geregelt, daß über das Gelenk eine Sollkraft von Vorderwagen zu Nachläufer übertragen wird. Der Nachläufer ist ständig in gezogenem Zustand und richtet sich daher allein aufgrund der übertragenen Gelenkkraft in der durch die Richtung des Vorderwagens vorgegebenen Fahrtrichtung aus. Dadurch ist das Fahrzeug auch ohne besondere Einrichtung im Bereich des Gelenks stabil.

In einfachster Ausführung der Erfindung steht die an dem Vorderwagen erzeugte Antriebskraft bzw. Bremskraft in fester Beziehung zu der Stellung des Fahrpedals. Die Antriebskraft bzw. die Bremskraft am Nachläufer wird dann so geregelt, daß die übertragene Gelenkkraft der Sollgelenkkraft entspricht. Beim Treiben des Fahrzeugs wird in also eine geringere Antriebskraft erzeugt. Beim Bremsen des Fahrzeugs wird ein höherer Bremsdruck in den Bremsen des Nachläufers gegenüber den Bremsen des Vorderwagens erzeugt.

Diese Vorgehensweise führt jedoch dazu daß einer bestimmten Stellung des Fahrpedals, das die Antriebskraft steuert, nicht ein bestimmter Wert der Antriebskraft zugeordnet werden kann, sondern diese beispielsweise von der Beladung des Nachläufers abhängig ist. Somit kann in unterschiedlichen Fahrbedingungen der gleichen Betätigung des Fahrpedals für das gesamte Fahrzeug gesehen nicht die gleiche Antriebskraft zugeordnet werden. Das gleiche gilt im gebremsten Fall.

Gemäß Unteransprüchen wird deshalb die Antriebskraft bzw. die Bremskraft sowohl am Vorderwagen als auch am Nachläufer verändert. Bei einer Unterschreitung der Sollgelenkkraft beim Treiben wird deshalb die Antriebskraft am Vorderwagen erhöht und die Antriebskraft am Nachläufer verringert. Umgekehrt wird bei einer Überschreitung der Sollgelenkkraft beim Treiben die Antriebskraft am Vorderwagen verringert und am Nachläufer erhöht. Dies kann so geschehen, daß eine bestimmte, aus der Regelabweichung zwischen übertragener Gelenkkraft und Sollgelenkkraft ermittelte Differenz von Antriebskraft am Vorderwagen und Antriebskraft am Nachläufer erzeugt wird und dabei gleichzeitig die Summe der Antriebskraft von Vorderwagen und Nachläufer konstant ist. Dadurch daß diese Summe konstant gehalten wird, ist die einer bestimmten Gaspedalstellung entsprechende Antriebskraft stets dieselbe.

Analog dazu ist die Vorgehensweise beim Bremsen. Ist die Sollgelenkkraft unterschritten, so wird die Bremskraft am Nachläufer erhöht und am Vorderwagen abgesenkt. Bei überschrittener Sollgelenkkraft wird die Bremskraft am Nachläufer verringert und am Vorderwagen erhöht. Auch dabei kann eine aus der Differenz zwischen übertragener Gelenkkraft und Sollgelenkkraft ermittelte Differenz von Bremskraft am Vorderwagen und Bremskraft am Nachläufer erzeugt werden und dabei gleichzeitig die Summe der Bremskraft von Vorderwagen und Nachläufer konstant sein. Dadurch daß diese Summe konstant gehalten wird, ist die einer bestimmten Bremspedalstellung entsprechende Bremskraft stets dieselbe.

Diese Art der Regelung kann beim Treiben dann nicht aufrechterhalten werden, wenn an zumindest einer Achse eine Antriebsschlupfregelung eingreift. An dieser Achse ist ein weiteres Erhöhen der Antriebskraft nicht mehr möglich. Es wird dann gemäß einer weiteren Ausgestaltung der Erfindung so geregelt, daß die Antriebskraft an dem Vorderwagen Werte bis zur maximal möglichen, durch die Antriebsschlupfregelung begrenzten Antriebskraft einnehmen. Die Antriebskraft am Nachläufer wird so geregelt, daß die Sollgelenkkraft im Gelenk erreicht wird. Dadurch ist auch bei einsetztender Regelung der Antriebskraft durch eine Antriebsschlupfregelung ein stabiles Fahrverhalten gewährleistet.

Beim Bremsen ist das Aufrechterhalten einer konstanten Summe von Bremskraft am Vorderwagen und Nachläufer dann nicht mehr möglich, wenn eine Bremsdruckregelung durch ein Antiblockiersystem einsetzt. Die Bremskraft wird dann so geregelt, daß die Bremskraft am Nachläufer Werte bis zur maximal möglichen, durch das Antiblockiersystem begrenzten Bremskraft einnehmen, Die Bremskraft am Vorderwagen wird dann so geregelt, daß die Sollgekenkkraft im Gelenk erreicht wird. Somit ist auch bei einsetzender Regelung der Bremskraft durch ein Antiblockiersystem ein stabiles Fahrverhalten des Gelenkbusses sichergestellt.

Im Folgenden wird mittels eines einfachen Modells eine Beziehung zwischen den Umfangskräften am Rad und der Gelenkkraft hergeleitet. Das Modell beschränkt sich der Einfachheit halber auf die Geradeausfaht bzw. Kurvenfahhrten mit gegenüber dem Radstand großen Kurvenradien. Es gilt jedoch sowohl beim Treiben als auch beim Bremsen.

Für jedes Fahrzeug gilt, daß die Summe der Radumfangskräfte $U_R$ der Summe der Fahrwiderstände W entspricht. Dabei setzten sich die Fahrwiderstände aus Massenträgheit Wb, Rollwiderstand Wr, Luftwiderstand Wl und Neigungswiederstand Wn zusammen. Diese Widerstände berechnen sich, wenn m die Fahrzeugmasse, x der Weg und p die Fahrbahnneigung in Fahrtrichtung ist, nach den Gleichungen

$$Wb=mx''$$

$$Wr=mgf_r$$

$$Wl=c_wFx'^2$$

$$Wn=mgp$$

wobei $f_r$ der Rollwiderstandsbeiwert, $c_w$ der Luftwiderstandsbeiwert, F die Stirnfläche und g die Erbbeschleunigung ist.

Für die Fahrwiderstände von Vorderwagen $U_{RV}$ und Nachläufer $U_{RN}$ ergibt sich somit:

$$U_{RV}=m_Vx''+m_Vgf_r+m_Vgp+c_WFx'^2+G$$

$$U_{RN}=m_Nx''+m_Ngf_r+m_Ngp-G$$

wobei G die Gelenkkraft zwischen Nachläufer und Vorderwagen ist. Demnach ergibt sich für das Verhältnis zwischen den Umfangskräften an Vorderwagen und Nachläufer:

$$\frac{U_{RV}}{U_{RN}}=\frac{m_v[x''+gf_r+gp]+c_wFx'^2+G}{m_v[x''+gf_f+gp]-G},$$

woraus ersichtlich ist, daß zur Aufrechterhaltung einer bestimmten, beispielsweise konstanten Gelenkkraft G die Vorgabe eines konstanten Verhältnisses der Umfangskräfte nicht ausreicht. Es ist daher zur Aufrechterhaltung einer bestimmten Sollgelenkkraft zwischen Vorderwagen und Nachläufer am einfachsten die Gelenkkraft über die am Vorderwagen und am Nachläufer erzeugten Umfangskräfte (Bremskraft, Antriebskraft) zu regeln. Dabei kann die Sollgelenkkraft als konstanter Wert vorgegeben sein. Sie kann aber auch in Abhängigkeit von variablen Fahrzeugdaten - beispielsweise durch die Lastverteilung zwischen Vorderwagen und Nachläufer - und Fahrzustandsgrößen - beispielsweise Fahrzeuggeschwindigkeit, Lenkwinkel - vorgegeben werden.

Zweckmäßige Ausgestaltungen der Erfindung können den Unteransprüchen entnommen werden; im übrigen ist die Erfindung an Hand eines in der Zeichnung dargestellten Ausführungsbeispieles nachfolgend noch erläutert; dabei zeigen:

Fig. 1 eine schematische Darstellung eines Gelenkbusses und seinen Achsen,

Fig. 2 das Flußdiagramm einer erfindungsgemäßen Steuerung der Antriebskraft und der Bremskraft und

Fig. 3 das Blockschaltbild der Regelung der Antriebskraft und der Bremskraft für ein mit einem Radnabenmotor angetriebenen Rad.

In der Figur 1 ist schematisch die Anordnung der Fahrzeugachsen eines Gelenkomnibusses 100 dargestellt. Der Gelenkbus 100 besteht aus einem Vorderwagen 101 und einem mit dem Vorderwagen 101 über ein Gelenk 103 verbundenen Nachläufer 102. Der Vorderwagen 101 weist zwei Achsen auf. Die am vorderen Fahrzeugende angeordnete, lenkbare Vorderachse V ist nicht angetrieben. die hintere Achse des Vorderwagens 101, die Mittelachse M dagegen ist eine angetriebene Achse. Im Nachläufer 102 ist eine ebenfalls angetriebene Achse, die Hinterachse H, angeordnet. An allen Achsen sind die Räder gebremst, wobei die an den Rädern erzeugte Bremskraft zumindest achsweise durch ein Antiblockiersystem geregelt wird.

An den Rädern der angetriebenen Achsen ist jeweils ein mit elektrischer Energie angetriebener Radnabenmotor 105 angeordnet. Die Antriebskraft an den Radnabenmotoren 105 wird in einfacher Weise über den dem Radnabenmotor 105 zugeführten Strom und/oder die an dem Radnabenmotor 105 angelegte Spannung gesteuert. Die Antriebsenergie für die Radnabenmotoren 105 wird beispielsweise durch einem Verbrennungsmotor 104 erzeugt und in elektriche Energie umgewandelt werden. Sie kann aber auch einem Fahrdraht entnommen werden. Der Fahrer des Gelenkbusses 100 steuert die gewünschte Antriebskraft bzw. die gewünschte Bremskraft durch die Fahrpedale 106,107. Die Antriebskraft wird über das Gaspedal 106 gesteuert. Dazu wird über einen Wegsensor 108 die Stellung des Gaspedals 106 erfaßt und ein entsprechendes Signal dem Steuergerät 110 zugeführt. Die Stellung des Bremspedals 107 kann in gleicher Weise mit einem weiteren Wegsensor 108 erfaßt werden. Im übrigen kann auch das Signal eines Bremslichtschalters der Steuerung zugeführt werden. Auch ist der ungeregelte, nur durch die Betätigung des Bremspedals 107 erzeugte Bremsdruck ein Maß für die Betätigung des Bremspedals. Dem Steuergerät 110 wird ferner das Signal des Gelenkkraftsensors 111 übermittelt, das die zwischen Vorderwagen und Nachläufer übertragene Gelenkkraft erfaßt. Dabei reicht es nicht aus, den Betrag der Gelenkkraft zu erfaßen, es muß zumindest auch festgestellt werden, ob der Nachläufer vom Vorderwagen gezogen ist oder ob er den Vorderwagen schiebt.

Über die Radsteuergeräte 112 wird für jede angetriebene Achse die Antriebskraft der Radnabenmotoren 105 und die Bremskraft gesteuert. Während eines Bremsvorgangs, also dann, wenn vom Fahrer das Bremspedal 107 betätigt wird, können die Radnabenmotoren 105 auch als Generatoren verwendet werden. Zur Regelung der dadurch von den Radnabenmotoren 105 erzeugten Bremskraft, muß die Generatorleistung durch die dem Generator nachgeschaltete Last geregelt sein. Dabei kann die von den Generatoren erzeugte Energie auch in einen Speicher oder gegebenenfalls auch in den Fahrdraht eingespeist werden. Ein Ausführungsbeispiel für die Radsteuergeräte 112 ist in dem Blockschaltbild der Fig. 3 dargestellt. Den Rädern der Vorderachse V sind die Radsteuergeräte 113 zugeordnet, die sich dadurch von den Radsteuergeräten unterscheiden, daß in ihnen nur die Bremskraft über den in die Radbremsen eingeleiteten Bremsdruck geregelt wird.

In der Fig.2 ist das Flußdiagramm einer erfindungsgemäßen Steuerung der Antriebskraft dargestellt. Die von dem Gelenkkraftsensor gemessene Gelenkkraft FG wird im Schritt der Steuerung zugeführt. Im Schritt 202 wird aufgrund der unter Berücksichtigung der Kraftrichtung ermittelte Differenz FG-FS zwischen der Gelenkkraft FG und der vorgegebenen Sollgelenkkraft FS die Differenzkraft DF ermittelt. Die Differenzkraft ist in einfachster Weise die Hälfte des Betrages der Differenz FG-FS. Um diese Differenzkraft DF muß die Antriebskraft bzw. die Bremskraft verändert werden, damit die Regelabweichung zwischen Sollgelenkkraft FS und Gelenkkraft FG ausgeregelt wird. Im Schritt 203 wird dann unter Berücksichtigung der Kraftrichtung verglichen ob die Gelenkkraft FG oberhalb oder unterhalb der Sollgelenkkraft FS liegt. Ist die Gelenkkraft FG geringer als die Sollgelenkkraft FS so wird zum Schritt 204 gegangen. Andernfalls erfolgt der Sprung zum Schritt 215.

Im Schritt 204 wird dann überprüft ob der Gelenkbus getrieben ist oder ob er gebremst ist. Dies kann in einfacher Weise über die Schaltstellung des Bremslichtaschalters oder über die Stellung der Fahrpedale 106,107 erfaßt werden. Ist das Fahrzeug getrieben, so wird im Schritt 205 die Antriebskraft $FA_M$ an der Mittelachse M um die Differenzkraft DF erhöht.Im Schritt 206 wird dann überprüft, ob dies zu einem Regeleingriff des Antriebsschlupfreglers ASR(M) an der Mittelachse M führt. Solange keine Regelung durch den Antriebsschlupfregler ASR(M) erfolgt, wird in Schritt 209 die Antriebskraft $FA_H$ an der Hinterachse um die Differenzkraft DF verringert und anschließend zum Schritt 226 übergegangen. Ansonsten wird im Schritt 207 aufgrund der durch die Antriebsschlupfregelung ASR(M) tatsächlich erzeugten maximalen Antriebskraft $FA_M$'die zusätzliche Differenzkraft DF' ermittelt. In einfachster Weise ist der Wert der zusätzlichen Differenzkraft DF' der Betrag der Differenz aus tatsächlicher Antriebskraft $FA_M$' und der Antriebskraft $FA_M$. Im Schritt 208 erfolgt dann die Ermittlung der Antriebskraft $FA_H$ an der Hinterachse H. Sie wird um die Differenzkraft DF und um die zusätliche Differenzkraft DF' verringert. Der Schritt 226 schließt sich an.

Im Schritt 226 wird überprüft, ob an der Hinterachse die Regelung der Antriebskraft $FA_H$ durch das Antriebsschlupfregelsystem ASR(H) eingesetzt hat. Ist dies der Fall, so werden die Schritte 227 und 228 durchgeführt. Ansonsten wird direkt zum Schritt 201 zurückgesprungen. Im Schritt 227 wird die zusätzliche Differenzkraft DF' berechnet, die sich aus der Differenz zwischen tatsächlicher, durch den Antriebsschlupftregler ASR(H) begrenzter Antriebskraft $FA_H$' und dem Wert für die Antriebskraft $FA_H$ an der Hinteachse H ergibt. Gemäß Schritt 228 wird die Antriebskraft an der Mittelachse M um den Betrag der zusätzlichen Differenzkraft DF' verringert.Danach wird zum Schritt 201 zurückgesprungen und ein neuer Regelzyklus schließt sich an.

Wurde im Schritt 204 festgestellt, daß das Fahrzeug gebremst ist, so wird im Schritt 210 die Bremskraft $FB_H$ um die Differenzkraft DF erhöht. Im Schritt 211 wird überprüft, ob dies zu einem Regeleingriff durch das Antiblockiersystem ABS(H) an der Hinterachse H führt. Ist dies der Fall, so wird im Schritt 212 die zusätzliche Differenzkraft DF' aus der Differenz zwischen der Bremskraft $FB_H$ und der tatsächlichen, durch das Antiblockiersystem ABS(H) begrenzten Bremskraft $FB_H$' ermittelt. Im Schritt 213 wird dann die Bremskraft $FB_{VM}$ an der Vorderachse V und an der Mittelachse M berechnet, indem von der Bremskraft $FB_{VM}$ der Betrag der Differenzkraft DF und der Betrag der zusätzlichen Differenzkraft DF' abgezogen werden. Fand kein Regeleingriff durch das Antiblockiersystem ABS(H) statt, so wird im Schritt 214 die Bremskraft $FB_{VM}$ an der Vorderachse und an der Mittelachse um den Betrag der Differenzkraft DF vermindert. In beiden Fällen schließt sich der Schritt 229 an die Bestimmung der Bremskraft $FB_{VM}$ an.

Im Schritt 229 wird überprüft, ob an der Vorderachse V und an der Mittelachse M die Regelung der Bremskraft $FB_{VM}$ durch das Antiblockiersystem ABS(VM) eingesetzt hat. Ist dies der Fall, so werden die Schritte 230 und 231 durchgeführt. Ansonsten wird direkt zum Schritt 201 zurückgesprungen. Im Schritt 230 wird die zusätzliche Differenzkraft DF' berechnet, die sich aus der Differenz zwischen tatsächlicher, durch das Antiblockiersystem ABS(VM) begrenzte Bremskraft $FB_{VM}$' und dem Wert für die Bremskraft $FB_{VM}$ an der Vorderachse V und der Mittelachse M ergibt. Gemäß Schritt 231 wird die Bremskraft $FB_H$ an der Hinterachse H um den Betrag der zusätzlichen Differenzkraft DF' verringert. Danach wird zum Schritt 201 zurückgesprungen und ein neuer Regelzyklus schließt sich an.

Damit ist der Ablauf der Steuerung für die Fälle bestimmt, bei denen die Sollgelenkkraft größer ist als die Gelenkkraft. Die Vorgehensweise, wenn im Schritt 203 festgestellt wurde, daß die Sollgelenkkraft kleiner ist als die Gelenkkraft, ist im Wesentlichen 'symmetrisch' zu dem voranstehenden. die Verfahrensschritte werden nur kur zusammengefaßt.

Im Schritt 215 wird überprüft, ob das Fahrzeug getrieben ist. Ist dies nicht der Fall, so schließen sich die Schritte 216 bis 22o und 232 bis 234 an. Ansonsten folgen die Schritte 221 bis 225 und 235 bis 237.

Im Schritt 216 wird die Bremskraft $FB_{VM}$ am Vorderwagen, also an der Vorderachse V und der Mittelachse M um den Betrag der Differenzkraft DF erhöht. Wird dabei im Schritt 217 festgestellt daß dies zu einem Eingriff des Antiblockiersystems an Vorderachse V und Mittelachse M führt, so wird im Schritt 218 die zusätzliche Differenzkraft DF' bestimmt. Die Bremskraft $FB_H$ an der Hinterachse wird dann gemäß dem Schritt 218 um die Differenzkraft Df und die zusätzliche Differenzkraft DF' vermindert. Findet keine Regelung durch das Antiblokkiersystem ABS(VM) statt, so wird gemäß Schritt 22o die Bremskraft $FB_H$ an der Hinterachse H um die Differenzkraft DF vermindert. Im Schritt 232 wird überprüft, ob an der Hinterachse H eine Regelung der Bremskraft vorgenommen wird. Ist dies der Fall, so wird in Schritt 233 die zusätzliche Differenzkraft DF' bestimmt und dann im Schritt 234 die Bremskraft $FB_{VM}$ um die zusätzliche Differenzkraft DF' vermindert. Es wird zum Schritt 201 zurückgesprungen, ein neuer Regelzyklus schließt sich an.

Im Schritt 221 wird die Antriebskraft $FA_H$ an der Hinterachse H um die Differenzkraft erhöht. Wird dabei im Schritt 222 festgestellt, daß eine Antriebsschlupfregelung ASR(H) an der Hinterachse H erfolgt, so wird gemäß Schritt 223 die zusätzliche Differenzkraft DF' ermittelt. Die Antrieskraft $FA_M$ an der Mittelachse H wird im Schritt 224 um die Differenzkraft DF und die zusätzliche Differenzkraft DF' vermindert. Wird kein Eingreifen der Antriebsschlupfregelung ASR(H) festgestellt, so wird im Schritt 225 die Antriebskraft $FA_M$ an der Mittelachse M um die Differenzkraft DF vermindert. Nach der Ermittlung der Antriebskraft $FA_M$ wird im Schritt 235 überprüft, ob ein Eingriff des Antriebsschlupfregelsystems ASR(M) an der Mittelachse M erfolgt. Ist dies der Fall so wird im Schritt 236 die zusätzliche Differenzkraft DF' bestimmt und im Schritt 237 die Antriebskraft $FA_H$ an der Hinterachse H um den Betrag der Differenzkraft vermindert. Es wird zum Schritt 201 zurückgesprungen.

Die Figur 3 zeigt das Blockdiagramm eines Radreglers 105 zur Regelung der Antriebskraft eines Radnabenmotors und zur Regelung der Bremskraft an einem Rad. In der Gelenkkraftmeßeinrichtung 309 wird die Gelenkkraft FG gemessen. Aus der gemessenen Gelenkkraft FG und der Sollgelenkkraft FS wird die Regelabweichung ermittelt.

Anstelle der direkten Vorgabe einer Antriebskraft FA bzw. einer Bremskraft FB wird eine Vorgabe der Radbeschleunigung w' durchgeführt. Dies ist deshalb möglich, weil die Raddrehbeschleunigungen w' in einer direkten Beziehung zur von den Rädern übertragenen Antriebskraft FA stehen. Für den Antriebsfall ist eine Antriebsraddrehzahlverarbeitung 302 und für den Bremsfall eine Bremsdrehzahlverarbeitung 301 für die Ermittlng der Raddrehbeschleunigung w' zuständig. Dazu werden jeweils die erzeugte Raddrehzahl w und die Raddrehbeschleunigung w' aller Räder zugeführt.

Unter Berücksichtigung der Vorgaben eines Antiblockiersystems wird in der Bremsdrehzahlverarbeitung ein Sollwert für die Radrehbeschleunigung w' ermittelt. Die Regelabweichung zur aktuellen Raddrehbeschleunigung w' wird ermittelt und einem Bremsregler 303 und einem Motorbremsregler 304 zugeführt. Dem Bremsregler 303 und dem Motorbremsregler 304 wird ferner noch ein die Stellung des Bremspedals repräsentierendes Signal $s_B$ zugeführt und die Regelabweichung der Gelenkkraft zugeführt. Der Bremsregler steuert dann die Betriebsbremsanlage 300 des ihm zugeordneten Rades an und steuert den Bremsdruck PB an den Radbremsen. Das Rad 308 ändert seine Raddrehzahl w und die Raddrehbeschleunigung w' aufgrund des gegebenenfalls erzeugten Bremsdrucks. Das Verhalten des Rades 308 beeinflußt wiederum das dynamische Verhalten des Gelenkbusses 310. Der Motorbremsregler 304 regelt die Generatorleistung des elektrischen Antriebsmotors, dem Radnabenmotor 307, bei Bremsbetätigung der Bremse. Es ist sowohl der Strom I als auch die Spannung U regelbar.

Ein weiterer Sollwert für die Raddrehbeschleunigung w' wird in der Antriebsdrehzahlverarbeitung 302 unter Berücksichtigung eines Antriebsschlupfreglers durchgeführt. Aus dem ermittelten Sollwert und dem Istwert wird die Regelabweichung ermittelt und dem Antriebsregler 305 zugeführt. Dem Antriebsregler wird ferner noch ein die Stellung des Gaspedals repräsentierendes Signal $s_G$ und die Regelabweichung der Gelenkktaft FG zugeführt. Daraus ermittelt der Antriebsregler den vom Radnabenmotor 307 benötigten Fahrstrom I bzw. die benötigte Antriebsspannung U. Durch die Änderung des Bertiebszustandes des Radnabenmotors 307 wird die Raddrehzahl w und die Raddrehbeschleunigung w' beeinflußt und dadurch die Dynamik des Gelenkbuses. Über die Regelung der Raddrehbeschleunigung an allen Rädern bzw. zumindest an allen Achsen des Gelenkbuses wird ein stabiles Fahrverhalten und ein Ausbrechen des Nachläufers verhindert. Der Nachläufer wird ständig vom Vorderwagen gezogen und in seiner Richtung stabilisiert. Übermäßige Knickwinkel im Gelenk werden sicher vermieden.

In einer in den Zeichnungen nicht dargestellten Ausführungsform der Erfindung ist ein vom Fahrer betätigbares Bedienelement vorgesehen, das es erlaubt, die Regelung der Antriebskraft dann zu unterlassen, wenn das Fahrzeug einen Geschwindigkeitsschwellenwert, beispielsweise 20 km/h, nicht überschritten hat. Dies soll in Situationen, in denen an allen Fahrzeugachsen nur eine geringe Antriebskraft auf die Fahrbahn übertragen werden kann erlauben, unter Verzicht auf einen Knickschutz, das Fahrzeug anzufahren. In der Regel ist in diesem Geschwindigkeitsbereich das Verhalten des Fahrzeugs für den Fahrer noch kontrollierbar. Ein Überschreiten des Geschwindigkeitsschwellenwertes oder ein erneutes betätigen oder ein Abschalten der Zündung setzt die Knickschutzregelung wieder in Betrieb.

## Patentansprüche

1. Verfahren zur Begrenzung des Knickwinkels zwischen einem Vorderwagen und einem Nachläufer eines Gelenkomnibusses, bei dem zumindest eine Achse des Nachläufers und zumindest eine Achse des Vorderwagens angetrieben ist, bei dem die Antriebskraft und die Bremskraft durch Fahrpedale von einem Fahrer vorgegeben werden, und die Differenz zwischen der erzeugten Antriebskraft (FAM) am Vorderwagen und der erzeugten Antriebskraft (FAH) am Nachläufer regelbar ist, bei welchem Verfahren
die im Gelenk (103) zwischen Vorderwagen (101) und Nachläufer (102) übertragene Gelenkkraft (FG) erfaßt wird und
   - beim Treiben die Differenz der Antriebskraft zwischen Vorderwagen (101) und Nachläufer (102) und
   - beim Bremsen die Differenz der Bremskraft zwischen Vorderwagen (101) und Nachläufer (102)
   
   so geregelt wird, daß die übertragene Gelenkkraft (FG) einer vorgegebenen Sollgelenkkraft (FS) entspricht.

2. Verfahren nach Anspruch 1,
**dadurch gekennzeichnet,**
daß die Komponente der Gelenkkraft (FG) in Richtung des Vorderwagens (101) erfaßt wird.

3. Verfahren nach Anspruch 1 oder 2,
**dadurch gekennzeichnet,**
daß die Sollgelenkkraft (FS) in Richtung des Vorderwagens (101) gerichtet und so vorgegeben ist, daß der Nachläufer (102) vom Vorderwagen (101) gezogen wird.

4. Verfahren nach Anspruch 1,
**dadurch gekennzeichnet,**
daß in Abhängigkeit der Stellung der Fahrpedale (107,108) und aufgrund von aktuellen Raddrehzahlen (w) und von aktuellen Raddrehbeschleunigungen (w') Sollwerte für die Raddrehbeschleunigung der angetriebenen bzw. der gebremsten Räder ermittelt werden und daß die Antriebsleistung bzw. der Bremsdruck an den Rädern so geregelt wird, daß die Raddrehbeschleunigungen (w') den ermittelten Sollwerten der Raddrehbeschleunigung entsprechen.

5. Verfahren nach Anspruch 4,
**dadurch gekennzeichnet,**
daß den Rädern einer Achse derselbe Sollwert der Raddrehbeschleunigung zugeordnet ist.

6. Verfahren nach Anspruch 4,
**dadurch gekennzeichnet,**
daß bei der Ermittlung der Sollwerte für die Raddrehbeschleunigungen die Werte durch ein Antiblockiersystem und ein Antriebsschlupfregelsystem begrenzt sind.

7. Verfahren nach Anspruch 1,
**dadurch gekennzeichnet,**
daß die Differenz ($FA_M$-$FA_{H)}$ beziehungsweise

($FB_{VM}$-$FB_H$) der Antriebskraft beziehungsweise der Bremskraft zwischen Vorderwagen (101) und Nachläufer (102) so verändert wird, daß die Summe der Antriebskraft bzw. die Summe der Bremskraft von Vorderwagen und Nachläufer konstant ist.

**8.** Verfahren nach Anspruch 7,
**dadurch gekennzeichnet,**
daß beim Bremsen die Summe der Bremskraft von Vorderwagen (101) und Nachläufer (102) dann nicht konstant ist, wenn an zumindest einer Achse (V,M,H) eine Regelung durch ein Antiblockiersystem erfolgt, wobei dann die Bremskraft durch die maximal erreichbare Bremskraft ($FB_H$') am Nachläufer (102) begrenzt und die Bremskraft am Vorderwagen (101) so bestimmt ist, daß die übertragene Gelenkkraft (FG) der vorgegebenen Sollgelenkkraft (FS) entspricht oder diese zumindest nicht unterschreitet.

**9.** Verfahren nach Anspruch 7,
**dadurch gekennzeichnet,**
daß beim Treiben die Summe der Antriebskraft von Vorderwagen und Nachläufer dann nicht konstant ist, wenn an zumindest einer Achse eine Regelung durch eine Antriebsschlupfregelsystem erfolgt, wobei dann die Antriebskraft durch die maximal erreichbare Antriebskraft ($FA_M$') am Vorderwagen (101) begrenzt und die Antriebskraft am Nachläufer (102) so bestimmt ist, daß die übertragene Gelenkkraft (FG) der vorgegebenen Sollgelenkkraft (FS) entspricht oder diese zumindest nicht unterschreitet.

**10.** Verfahren nach Anspruch 9,
**dadurch gekennzeichnet,**
daß unterhalb einer festgelegten Fahrgeschwindigkeitsschtwelle durch Betätigung eines Bedienelementes die Regelung der Gelenkkraft (FG) auf die vorgegebene Sollgelenkkraft (FS) solange außer Betrieb gesetzt wird, wie die Fahrgeschwindigkeitsschwelle nicht überschritten wird, und daß solange die Regelung der Gelenkkraft (FG) außer Betrieb gesetzt ist die Antriebskraft unabhängig für jede angetriebene Achse (V,M) aus der Stellung des Fahrpedals (106) bestimmt und durch ein Antriebsschlupfregelsystem geregelt wird.

**11.** Verfahren nach Anspruch 1,
**dadurch gekennzeichnet,**
daß die Antriebskraft an den Achsen durch Elektromotoren (105,307) erzeugt wird, wobei für die Spannung (U) und/oder der Strom (I) an den Elektromotoren (105,307) durch die Stellung des Fahrpedals (106) ein Wert vorgegeben wird, wobei ausgegehend von dem vorgegebenen Wert die Differenz zwischen Antriebskraft ($FA_M$) am Vorderwagen (101) und Antriebskraft ($FA_H$) am Nachläufer (102) durch Regelung der Spannung (U) und/oder des Stromes (I) der Elektromotoren (105,307) zumindest des Vorderwagens (101) oder zumindest des Nachläufers (102) erzeugt wird.

**12.** Verfahren nach Anspruch 11,
**dadurch gekennzeichnet,**
daß die Elektromotoren (105,307) Radnabenmotoren sind.

**13.** Verfahren nach Anspruch 11,
**dadurch gekennzeichnet,**
daß bei Bremspedalbetätigung die Elektromotoren (105,307) als Generatoren verwendet werden.

**14.** Verfahren nach Anspruch 13,
**dadurch gekennzeichnet,**
daß die in den als Generatoren arbeitenden Elektromotoren (105,307) erzeugte Energie in ein Fahrstromnetz eingespeist oder in einem Energiespeicher gespeichert wird.

**15.** Verfahren nach Anspruch 14,
**dadurch gekennzeichnet,**
daß die Generatorleistung in Abhängigkeit der durch sie erzeugten Bremskraft ($FB_H$,$FB_M$) geregelt ist.

**16.** Verfahren nach Anspruch 1,
**dadurch gekennzeichnet,**
daß zur Steuerung der Bremskraft ($FB_H$,$FB_{VM}$) die Stellglieder eines Antiblockiersystems genutzt werden.

## Claims

**1.** A method of limiting the bending angle between a front car and a trailer of an articulated bus, in which at least one axle of the trailer and at least one axle of the front car is driven, the driving force and the braking force being predetermined by a driver by means of pedals, and the difference between the driving force (FAM) generated on the front car and the driving force generated (FAH) on the trailer can be adjusted, by which method the swivel force (FG) transmitted in the joint (103) between the front car (101) and the trailer (102) is recorded and

- in driving mode the difference in driving force between front car (101) and trailer (102) and
- during braking the difference in braking force between front car (101) and trailer (102)

are so adjusted that the transmitted swivel force (FG) corresponds to a predetermined desired swivel force (FS).

**2.** A method as claimed in claim 1,

**characterised in that**
the components of the swivel force (FG) are recorded in the direction of the front car (101).

3. A method as claimed in claim 1 or 1,
**characterised in that**
the desired swivel force (FS) in the direction of the front car (101) is directed and predetermined so that the trailer (102) is pulled by the front car (101).

4. A method as claimed in claim 1,
**characterised in that**
depending on the position of the pedals (107, 108) and on the basis of current wheel speeds (w) and current wheel speed accelerations (w'), desired values for the wheel speed acceleration of the driven and the braked wheels are transmitted and the drive power or the braking pressure on the wheels is adjusted so that the wheel speed accelerations (w') correspond to the transmitted desired values of the wheel speed acceleration.

5. A method as claimed in claim 4,
**characterised in that**
the same desired value of wheel speed acceleration is assigned to the wheels of one axis.

6. A method as claimed in claim 4,
**characterised in that**
when the desired values for the wheel speed accelerations are transmitted, the values are limited by an anti-blocking system and a drive-slip control system.

7. A method as claimed in claim 1,
**characterised in that**
the difference ($FA_M$-$FA_H$) or ($FB_V$M-$FB_H$) of the driving force or braking force between front car (101) and trailer (102) is adjusted so that the sum of the driving force or the sum of the braking force of front car and trailer is constant.

8. A method as claimed in claim 7,
**characterised in that**
during braking, the sum of the braking force of front car (101) and trailer (102) is not constant if an adjustment is made by an anti-blocking system on at least one axle (V,M,H), in which case the braking force is limited by the maximum achievable braking force ($FB_H$') on the trailer (102) and the braking force on the front car (101) is determined so that the transmitted swivel force (FG) corresponds to the predetermined desired swivel force (FS) or at least does not fall below it.

9. Method as claimed in claim 7,
**characterised in that**
in drive mode, the sum of the driving force of front car and trailer is not constant if a drive-slip control system has made an adjustment on at least one axle, in which case the driving force is limited by the maximum achievable driving force ($FA_M$') on the front car (101) and the driving force on the trailer (102) is determined so that the transmitted swivel force (FG) corresponds to the predetermined desired swivel force (FS) or at least does not fall below it.

10. A method as claimed in claim 9,
**characterised in that**
below a travelling speed threshold set by operating an operating element, operation of the adjustment of the swivel force (FG) to the predetermined desired swivel force (FS) is suspended for as long as the travelling speed threshold is not exceeded and as long as operation of the adjustment of the swivel force (FG) is suspended the driving force is determined and regulated by a drive-slip control system independently for each driven axle (V,M).

11. A method as claimed in claim 1,
**characterised in that**
the driving force on the axles is generated by electric motors (105, 307), a value for the voltage (U) and/or the current (I) at the electric motors (105, 307) being predetermined by the position of the pedal (106), whereby, on the basis of the predetermined value, the difference between driving force ($FA_M$) on the front car (101) and driving force ($FA_H$) on the trailer (102) is generated by regulating the voltage (U) and/or the current (I) of the electric motors (105, 307) of at least the front car (101) or at least the trailer (102).

12. A method as claimed in claim 11,
**characterised in that**
the electric motors (105, 307) are wheel-hub motors.

13. A method as claimed in claim 11,
**characterised in that**
when the brake pedal is operated, the electric motors (105, 307) are used as generators.

14. A method as claimed in claim 13,
**characterised in that**
the energy produced in the electric motors (105, 307) operating as generators is fed to a drive-current network or is stored in an energy storage.

15. A method as claimed in claim 14,
**characterised in that**
the generator output is adjusted depending on the braking force ($FB_H$,$FB_M$) generated thereby.

16. A method as claimed in claim 1,

**characterised in that**
the adjusting members of an anti-blocking system are used to control the braking power ($FB_H$,$FB_V$M).

## Revendications

1. Procédé de limitation de l'angle d'articulation en un véhicule avant et une remorque d'un autobus articulé, pour lequel au moins un essieu de la remorque et au moins un essieu du véhicule avant sont entraînés, pour lequel la force d'entraînement et la force de freinage sont prédéterminées par un conducteur, au moyen de pédales, et la différence entre la force d'entraînement (FAM), générée sur le véhicule avant, et la force d'entraînement ($FA_H$), générée sur la remorque, étant réglable, procédé dans lequel la force d'articulation (FG), transmise dans l'articulation (103), entre le véhicule (101) avant et la remorque (102), est appréhendée et

    - ♦ en cas de propulsion, la différence de la force d'entraînement entre le véhicule avant (101) et la remorque (102), et
    - ♦ en cas de freinage, la différence de force de freinage entre le véhicule avant (101) et la remorque (102),
    - ♦ étant régulée, de manière que la force d'articulation (FG) transmise corresponde à une force d'articulation de consigne (FS) prédéterminée.

2. Procédé selon la revendication 1, caractérisé en ce que la composante de la force d'articulation (FG) dans la direction du véhicule avant (101) est appréhendée.

3. Procédé selon la revendication 1 ou 2, caractérisé en ce que la force d'articulation de consigne (FH) est orientée dans la direction du véhicule avant (101) et est prédéterminée de manière que la remorque (102) soit tractée par le véhicule avant (101).

4. Procédé selon la revendication 1, caractérisé en ce que, en fonction de la position des pédales (107, 108) et sur la base des vitesses de rotation réelles de roues (w) et des accélérations réelles en rotation des roues (w'), sont déterminées des valeurs de consignes destinées à l'accélération en rotation des roues entraînées, respectivement des roues freinées, et en ce que la puissance d'entraînement, respectivement la pression de freinage sur les roues, est réglée de manière les accélérations en rotation de roue (w') correspondent aux valeurs de consigne déterminées de l'accélération en rotation des roues.

5. Procédé selon la revendication 4 caractérisé en ce que la même valeur de consigne d'accélération en rotation des roues est associée aux roues d'un essieu.

6. Procédé selon la revendication 4, caractérisé en ce que, lors de la détermination des valeurs de consigne des accélération en rotation des roues, les valeurs sont limitées par un système anti-blocage et un système de régulation du glissement en entraînement.

7. Procédé selon la revendication 1, caractérisé en ce que la différence ($FA_M$-$FA_H$), respectivement ($FB_{VM}$-$FB_H$), de la force d'entraînement, respectivement de la force de freinage, entre le véhicule avant (101) et la remorque (102), est modifiée de manière que la somme de la force d'entraînement, respectivement la somme de la force de freinage, entre le véhicule avant et la remorque soit constante.

8. Procédé selon la revendication 7, caractérisé en ce que, en cas de freinage, la somme de la force de freinage du véhicule avant (101) et de la remorque (102) n'est alors pas constante lorsque, sur au moins un essieu (V,M,H), est effectuée une régulation par un système anti-blocage, la force de freinage étant alors limitée par la force de freinage maximale ($FB_H$') pouvant être atteinte sur la remorque (102), et la force de freinage sur le véhicule avant (101) étant déterminée de manière que la force d'articulation (FG) transmise corresponde à la force d'articulation de consigne prédéterminée (FS), ou bien au moins ne descende pas au dessous de celle-ci.

9. Procédé selon la revendication 7, caractérisé en ce que, en cas de propulsion, la somme de la force d'entraînement du véhicule avant et de la remorque n'est alors pas constante lorsque, sur au moins un essieu, s'effectue une régulation au moyen d'un système de régulation de glissement en entraînement, la force d'entraînement étant alors limitée par la force d'entraînement maximale ($FA_M$') pouvant être atteinte sur le véhicule avant (101), et la force d'entraînement sur la remorque (102) étant déterminée de manière que la force d'articulation (FG) transmise corresponde à la force d'articulation de consigne prédéterminée (FS), ou bien au moins ne descende pas en dessous de celle-ci.

10. Procédé selon la revendication 9, caractérisé en ce que, au dessous d'un seuil fixé de vitesse de roulage, par actionnement d'un élément de manoeuvre, la régulation de la force d'articulation (FG) à la force d'articulation de consigne prédéterminée (FS) est passée hors de fonctionnement, tant que le seuil de vitesse de roulage n'est pas dépassé, et en ce que, tant que la régulation de la force d'articulation (FG) est mise hors service, la force d'entraînement est déterminée indépendamment, pour chaque essieu entraînée (V,M), à partir de la position de la pédale d'accélérateur (106) et est reglée au moyen d'un système de régulation de glissement en entraînement.

**11.** Procédé selon la revendication 1, caractérisé en ce que la force d'entraînement sur les essieux est générée par des moteurs électriques (105, 307), une valeur, pour la tension (U) et/ou l'intensité (I) apppliquée aux moteurs électriques (105, 307), étant prédéterminée par la position de la pédale d'accélérateur (106), où, en partant de la valeur prédéterminée, la différence entre la force d'entraînement ($FA_M$) appliquée sur le véhicule avant (101) et la force d'entraînement ($^{FA}H$) appliquée sur la remorque (102) étant générée par une régulation de la tension (U) et/ou de l'intensité (I) des moteurs électriques (105, 307), au moins du véhicule avant (101) ou au moins de la remorque (102).

**12.** Procédé selon la revendication 11, caractérisé en ce que les moteurs électriques (105, 307) sont des moteurs au moyeu de roue.

**13.** Procédé selon la revendication 11, caractérisé en ce qu'en cas d'actionnement de la pédale de frein, les moteurs électriques (105, 307) sont utilisés comme générateurs.

**14.** Procédé selon la revendication 13, caractérisé en ce que l'énergie, ayant été produite dans les moteurs électriques (105, 307) travaillant comme générateur, est injectée dans le réseau électrique de roulage ou bien stockée dans un accumulateur d'énergie.

**15.** Procédé selon la revendication 14, caractérisé en ce que la puissance de générateur est régulée en fonction de la force de freinage (FBH, FBM) générée par celle-ci.

**16.** Procédé selon la revendication 1, caractérisé en ce que les organes de régulation d'un système antiblocage sont utilisés pour assurer la commande de la force de freinage (FBH, FBVM).

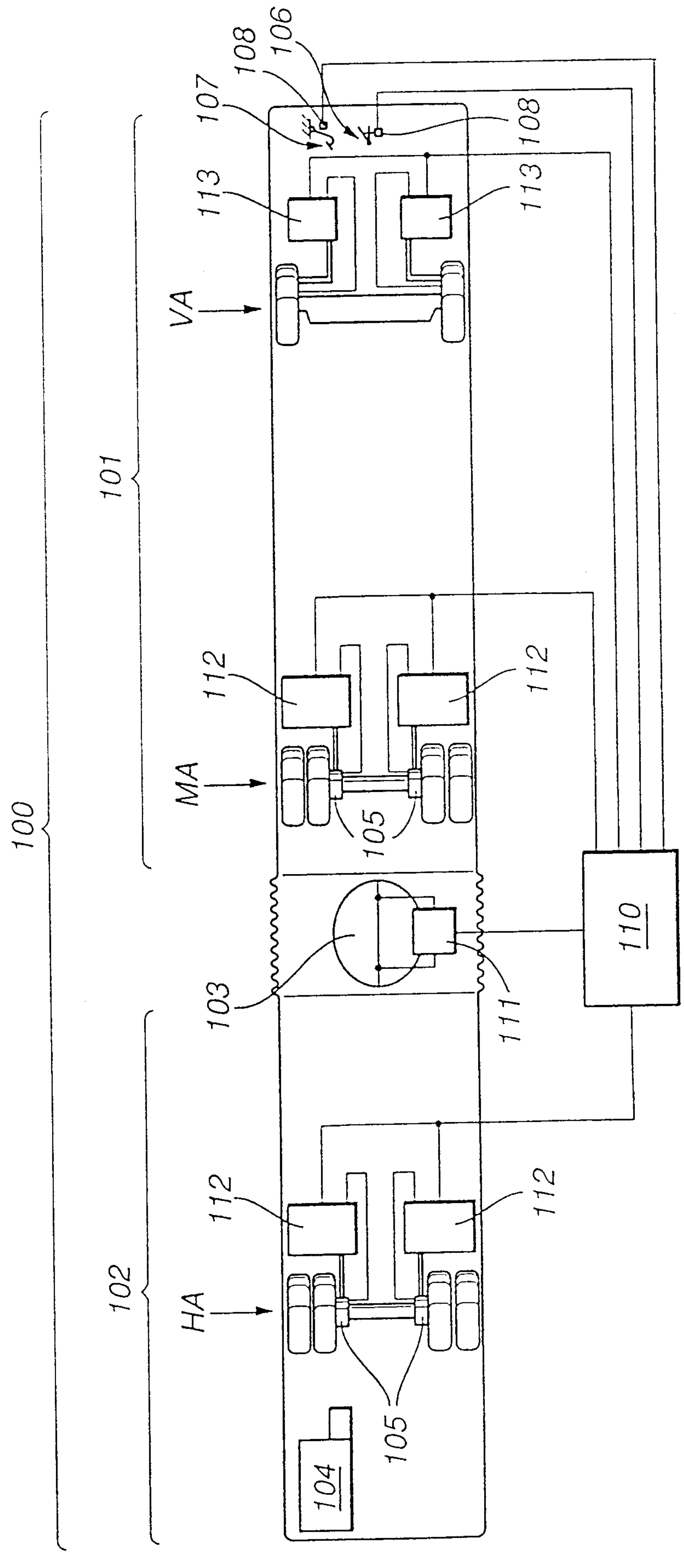


Fig. 1

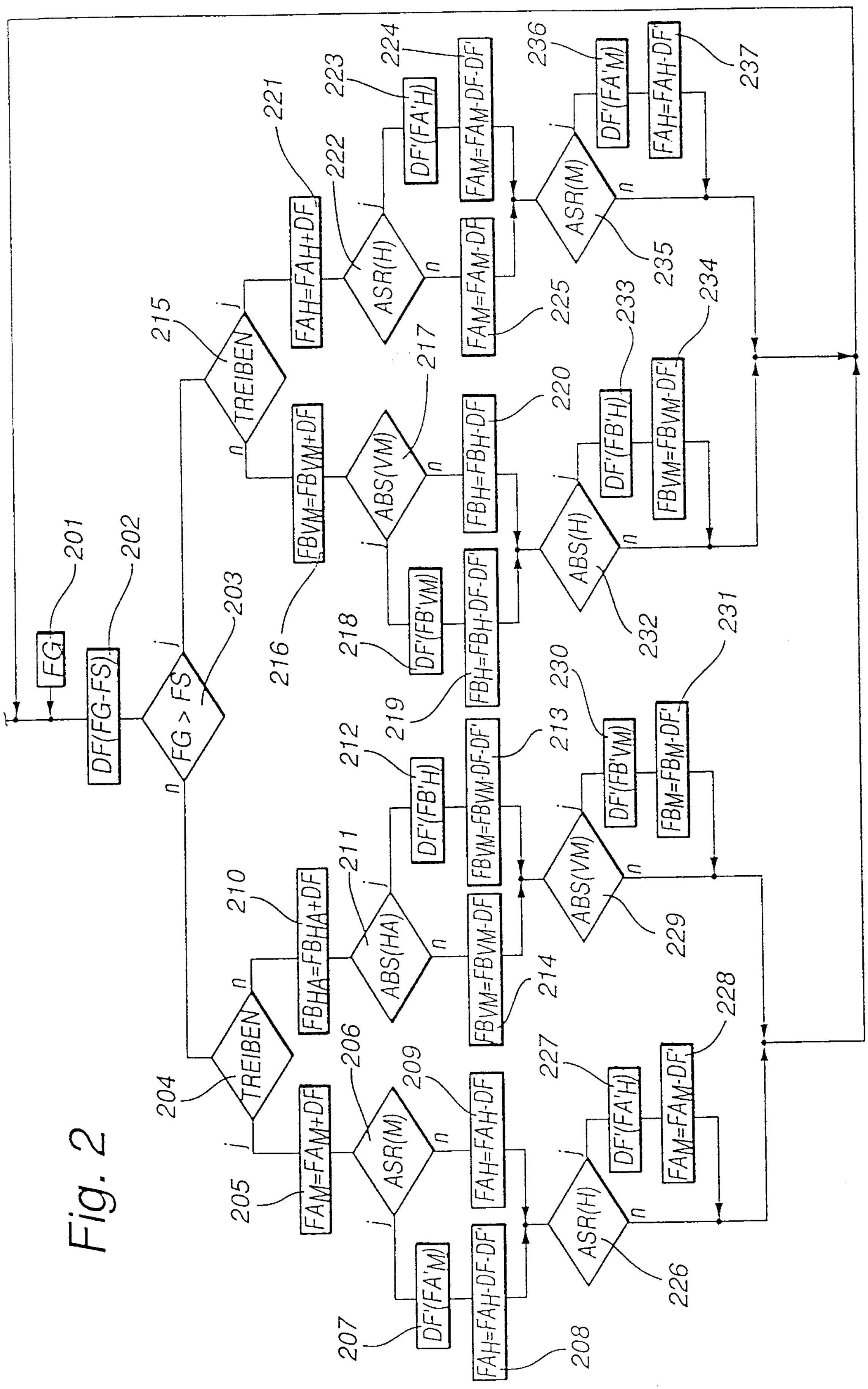
FG
201
DF(FG-FS)
202
FG > FS
203
j
n
TREIBEN
204
215
FAM=FAM+DF
205
ASR(M)
206
DF'(FA'M)
207
FAH=FAH-DF-DF'
208
FAH=FAH-DF
209
FBHA=FBHA+DF
210
ABS(HA)
211
DF'(FB'H)
212
FBVM=FBVM-DF-DF'
213
FBVM=FBVM-DF
214
FBVM=FBVM+DF
216
ABS(VM)
217
DF'(FB'VM)
218
FBH=FBH-DF-DF'
219
FBH=FBH-DF
220
FAH=FAH+DF
221
ASR(H)
222
DF'(FA'H)
223
FAM=FAM-DF-DF'
224
FAM=FAM-DF
225
ASR(H)
226
DF'(FA'H)
227
FAM=FAM-DF'
228
ABS(VM)
229
DF'(FB'VM)
230
FBM=FBM-DF'
231
ABS(H)
232
DF'(FB'H)
233
FBVM=FBVM-DF'
234
ASR(M)
235
DF'(FA'M)
236
FAH=FAH-DF'
237

Fig. 2

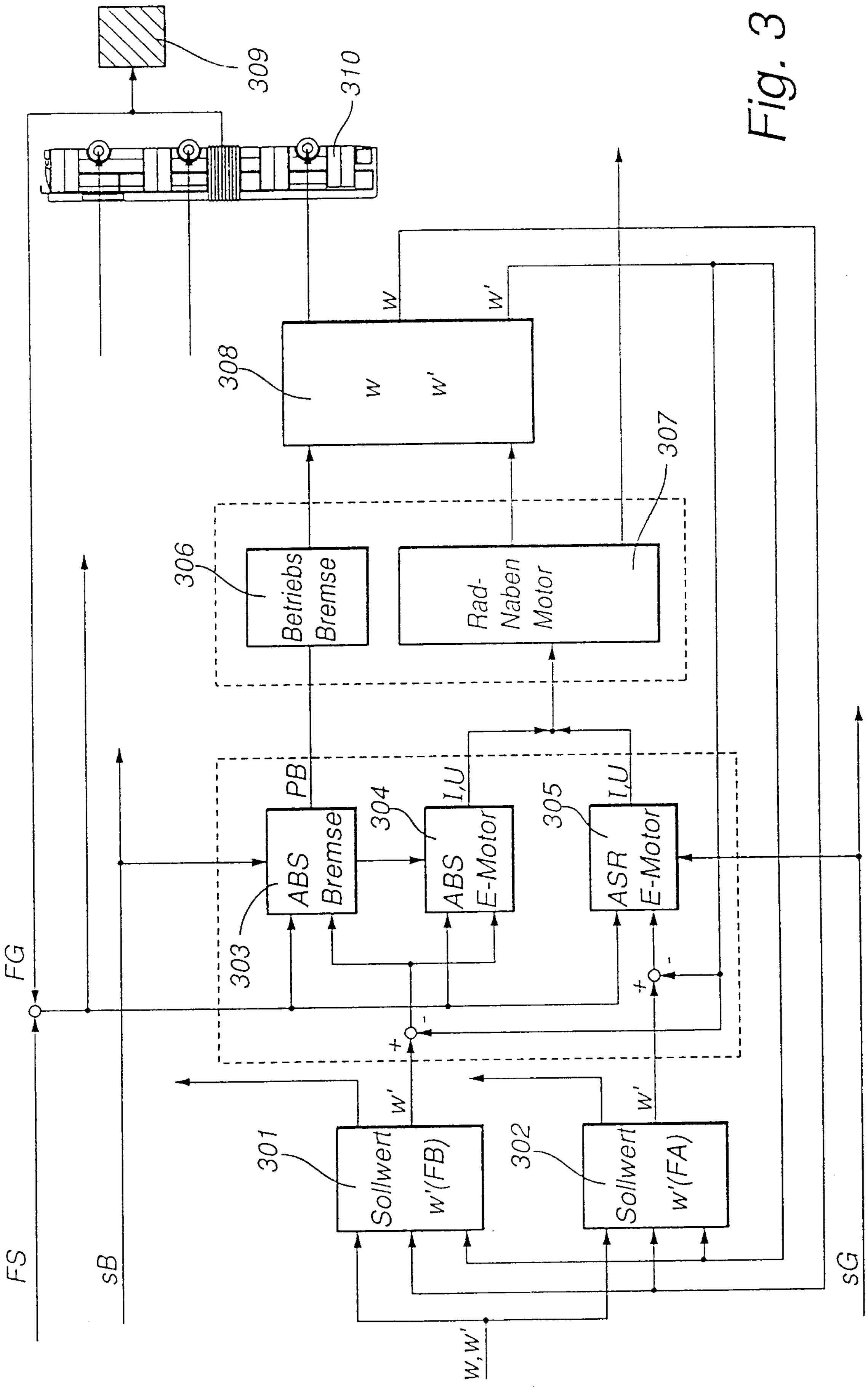

301
Sollwert
w'(FB)
302
Sollwert
w'(FA)
303
ABS
Bremse
304
ABS
E-Motor
305
ASR
E-Motor
306
Betriebs
Bremse
307
Rad-
Naben
Motor
308
w
w'
309
310
FS
FG
sB
sG
w,w'
PB
I,U
+
-


Fig. 3